# EUROPÄISCHE PATENTANMELDUNG

(11) **EP 4 714 589 A1**
(43) Veröffentlichungstag der Anmeldung: **25.03.2026**
(21) Anmeldenummer: 25201603.5
(22) Anmeldetag: 11.09.2025
(51) Int. Cl.: B23P 19/04, B08B 1/14, B08B 1/30, B60J 10/00

(54) **DICHTUNGSAPPLIKATIONSVORRICHTUNG MIT MEHRERE ELEMENTE UMFASSENDER ANDRÜCKROLLE**

(30) Priorität: 17.09.2024 DE 102024126819
(71) Anmelder: thyssenkrupp Automotive Body Solutions GmbH, 74076 Heilbronn (DE); thyssenkrupp AG, 45143 Essen (DE)
(72) Erfinder: Schneider, Marc, 66636 Tholey (DE)
(74) Vertreter: thyssenkrupp Intellectual Property GmbH

(57) **Zusammenfassung**

Die vorliegende Erfindung betrifft eine Applikationsvorrichtung (1) zum Applizieren eines Dichtungsprofils (2) auf einem dem Verschließen einer Karosserieöffnung dienenden Karosseriebauteil, umfassend einen Anrollkopf (3) zum Aufbringen des Dichtungsprofils (2) auf eine Aufnahmefläche des Karosseriebauteils und eine dem Anrollkopf (3) bezüglich der Aufnahmefläche des Karosseriebauteils vorauspositionierte Reinigungseinheit (5) zur mechanischen Reinigung der Aufnahmefläche, wobei die Reinigungseinheit (5) eine Andrückrolle (6) umfasst. Die Andrückrolle (6) umfasst ein Rollengrundelement aus einem ersten Material, das sich über die Breite der Andrückrolle (6) erstreckt. Weiter umfasst die Andrückrolle (6) ein Rollenmittenelement aus einem zweiten Material, das mittig an dem Rollengrundelement angeordnet ist und eine geringere Breite als das Rollengrundelement aufweist. Zudem umfasst die Andrückrolle (6) ein Rollenaußenelement aus einem dritten Material, wobei das Rollenaußenelement das Rollenmittenelement umgebend an dem Rollengrundelement und an dem Rollenmittenelement angeordnet ist. Dabei weist das dritte Material eine geringere Härte auf als das zweite Material und als das erste Material.

## Beschreibung

Die Erfindung betrifft eine Applikationsvorrichtung zum Applizieren eines Dichtungsprofils auf einem dem Verschließen einer Karosserieöffnung dienenden Karosseriebauteil, umfassend einen Anrollkopf zum Aufbringen des Dichtungsprofils auf eine Aufnahmefläche des Karosseriebauteils und eine dem Anrollkopf bezüglich der Aufnahmefläche des Karosseriebauteils vorauspositionierte Reinigungseinheit zur mechanischen Reinigung der Aufnahmefläche, wobei die Reinigungseinheit eine Andrückrolle umfasst, die insbesondere ausgebildet ist, ein Reinigungselement gegen die Aufnahmefläche zu drücken. Eine gattungsgemäße Applikationsvorrichtung wird in der DE 10 2017 221 018 B3 detailliert beschrieben. Eine weitere gattungsgemäße Applikationsvorrichtung offenbart die DE 10 2022 206 369 B4.

Die auf das Karosseriebauteil aufgebrachten Dichtungsprofile sind insbesondere dafür vorgesehen, eine dichtende Verbindung zwischen einer Karosserieöffnung und dem in ihr eingesetzten Verschließelement herzustellen. Bei so einem Verschließelement kann es sich insbesondere um eine Tür, einen Kofferraumdeckel oder ein Schiebedachelement handeln. Im Folgenden wird exemplarisch auf eine Fahrzeugtür eingegangen, wobei in dem Stadium, in dem das Dichtungsprofil auf der Fahrzeugtür angebracht wird, auch von einem Türzusammenbau gesprochen werden kann. Beispielsweise ist ein als "direktes Anrollen" bezeichnetes Verfahren zum Anbringen eines Dichtungsprofils auf einen Türzusammenbau bekannt. Hierbei wird das Dichtungsprofil von einer Endlosrolle mittels einer Fördereinrichtung gefördert und über einen Anrollkopf appliziert. Der Vorschub des Dichtungsprofils auf den Türzusammenbau wird entsprechend geregelt. Der Türzusammenbau an sich ist in einer bewegbaren Halterungsvorrichtung, beispielsweise über einen Industrieroboter, bewegbar aufgenommen und wird an dem ortsfesten Anrollkopf vorbeigeführt, der dabei das Dichtungsprofil auf dem Türzusammenbau appliziert. Sobald das Dichtungsprofil rings um den Türzusammenbau appliziert wurde, durchtrennt ein Schnittmesser das Dichtungsprofil, um es von der Endlosrolle abzulängen. Hiernach müssen beide Stoßenden derart einander angenähert werden, dass nach Möglichkeit ein quasi nahtloses, durchgängiges Dichtungsprofil entsteht. Ein solches Applizieren ist aber auch mit einem mobilen Applikationskopf, wie beispielsweise in der DE 10 2022 206 369 B4 offenbart, möglich, wobei der Applikationskopf zum Applizieren des Dichtungsprofils an dem fixierten Karosseriebauteil entlanggeführt wird.

Die Dichtungsapplikation erfolgt regelmäßig innerhalb der normalen Produktionsumgebung, in der Staubfreiheit nicht gewährleistet werden kann. Auch kann infolge von Handhabungsprozessen nicht ausgeschlossen werden, dass sich ein Schmierfilm auf dem Karosseriebauteil absetzt. Um eine gute Verklebungsqualität zu gewährleisten, muss zumindest die Aufnahmefläche des Karosseriebauteils frei von Staub, Feuchtigkeit und Schmiermittelrückständen sein. Diese Verunreinigungen können dabei mit einer von der Applikationsvorrichtung umfassten Reinigungseinheit, insbesondere wie in der
DE 10 2017 221 018 B3 beschrieben, entfernt werden. Dabei wird die voreilenden Andrückrolle der Reinigungseinheit auf die benötigte Y-Koordinate eingestellt und über einen Federmechanismus, der insbesondere pneumatisch ausgebildet sein kann, mit einem mechanischen Reinigungselement, insbesondere einem Reinigungsvlies, an das Karosseriebauteil angedrückt.

Als nachteilig hierbei hat sich gezeigt, dass bei komplexen Bauteilgeometrien, insbesondere im Bereich von sogenannten S-Schlägen oder im Bereich von Ecken, unzufriedenstellende Reinigungsergebnisse erzielt werden, insbesondere weil Winkelabweichungen eines Bauteilflansches nicht oder nur unzureichend ausgeglichen werden können.

Vor diesem Hintergrund ist es eine Aufgabe der vorliegenden Erfindung, eine Applikationsvorrichtung mit einer verbesserten Reinigungseinheit bereitzustellen, mit der bessere Reinigungsergebnisse bei komplexen Bauteilgeometrien, insbesondere im Bereich von S-Schlägen oder im Bereich von Ecken, erzielbar sind.

Zur Lösung dieser Aufgabe wird eine Applikationsvorrichtung gemäß Anspruch 1 vorgeschlagen. Weitere vorteilhafte Ausgestaltungen der Erfindung sind in den abhängigen Ansprüchen und der Beschreibung beschrieben sowie in den Figuren dargestellt.

Die vorgeschlagene Lösung sieht eine Applikationsvorrichtung zum Applizieren eines Dichtungsprofils auf einem dem Verschließen einer Karosserieöffnung dienenden Karosseriebauteil vor, wobei die Applikationsvorrichtung einen Anrollkopf zum Aufbringen des Dichtungsprofils auf eine Aufnahmefläche des Karosseriebauteils und eine dem Anrollkopf bezüglich der Aufnahmefläche des Karosseriebauteils vorauspositionierte Reinigungseinheit zur mechanischen Reinigung der Aufnahmefläche aufweist. Die Reinigungseinheit umfasst eine Andrückrolle, die ein rotationssymmetrisch bezüglich einer Rotationsachse der Andrückrolle ausgebildetes Rollengrundelement aus einem ersten Material, ein rotationssymmetrisch bezüglich der Rotationsachse der Andrückrolle ausgebildetes Rollenmittenelement aus einem zweiten Material und ein rotationssymmetrisch bezüglich der Rotationsachse der Andrückrolle ausgebildetes Rollenaußenelement aus einem dritten Material umfasst. Das dritte Material weist dabei eine geringere Härte, insbesondere einen geringeren Härtewert, weiter insbesondere eine geringere Shore-Härte, als das zweite Material und als das erste Material auf. Des Weiteren ist insbesondere vorgesehen, dass sich das Rollengrundelement über die Breite der Andrückrolle erstreckt, dass das Rollenmittenelement mittig bezüglich des Rollengrundelements angeordnet ist und zumindest in einem Bereich eines größten Durchmessers des Rollenmittenelements eine geringere Breite als das Rollengrundelement aufweist, und dass das Rollenaußenelement das Rollenmittenelement umgebend an dem Rollengrundelement und an dem Rollenmittenelement angeordnet ist. Vorteilhafterweise wird durch diese Andrückrolle mit unterschiedlich harten beziehungsweise unterschiedlich elastischen Materialien erreicht, dass Winkelabweichungen eines Bauteilflansches einer Aufnahmefläche des Karosseriebauteils durch "Nachfedern" der Andrückrolle ausgeglichen werden können, wobei das Material des Rollenaußenelements vorteilhafterweise deutlich weicher ist als das des Rollenmittenelements.

Zudem ist insbesondere vorgesehen, dass die Reinigungseinheit des Weiteren ein mechanisches Reinigungselement umfasst und vorteilhafterweise dazu ausgebildet ist, das Reinigungselement mit einer Umlaufbewegung unabhängig von der Applikationsbewegung des Anrollkopfes entlang der Aufnahmefläche zu beaufschlagen, wobei die Andrückrolle vorteilhafterweise dazu ausgebildet ist, das Reinigungselement gegen die Aufnahmefläche zu drücken. Das mechanische Reinigungselement ist dabei insbesondere ein Reinigungsvlies, das über die Andrückrolle geführt wird. Hierbei bezieht sich der Begriff "mechanisches Reinigungselement" auf das physikalische Wirkprinzip, gemäß dem Verunreinigungen durch einen physischen Kontakt zwischen dem Reinigungselement und der zur reinigenden Oberfläche beseitigt werden. Vorteilhafterweise ist die Reinigungseinheit so ausgestaltet, dass das Reinigungselement eine autark gesteuerte Umlaufbewegung ausführen kann, die der eigentlichen Applikationsbewegung überlagert werden kann und von dieser nicht vollständig abhängig ist.

Somit kann vorteilhafterweise je nach Grad der Verunreinigung die Umlaufgeschwindigkeit und damit die Intensität der Reinigung angepasst werden. Insbesondere kann vorgesehen sein, dass das Reinigungselement an sich während des Applikationsprozesses überhaupt keine eigene Umlaufbewegung ausführt, sondern sich lediglich mit der Applikationsgeschwindigkeit entlang der zur reinigenden Oberfläche bewegt. Insbesondere kann alternativ aber auch vorgesehen sein, dass das Reinigungselement an sich eine eigene Umlaufbewegung ausführt. Fällt die Umlaufgeschwindigkeit des Reinigungselements eher gering aus, entsteht durch die Überlagerung mit der Applikationsbewegung eine Geschwindigkeit des Reinigungselements gegenüber der Aufnahmefläche, die nur unwesentlich höher als die Applikationsgeschwindigkeit ist. Die Umlaufgeschwindigkeit des Reinigungselements kann aber auch verhältnismäßig hoch eingestellt werden, insbesondere wenn der Grad der Verunreinigung der Aufnahmefläche hoch ist. Dies kann dann allerdings zu einem höheren Verschleiß und/oder zu einem verkürzten Wechselintervall des Reinigungselements führen. Unter dem Begriff "vorauspositioniert" ist insbesondere zu verstehen, dass die Reinigungseinheit gegenüber dem Anrollkopf so positioniert ist, dass - in Applikationsrichtung betrachtet - die Reinigungseinheit eine Stelle der Aufnahmefläche des Karosseriebauteils kontaktiert, bevor diese gleiche Stelle von dem Anrollkopf zum Applizieren des Dichtungsprofil überfahren wird.

Die Applikationsvorrichtung selbst kann als stationäre Applikationsvorrichtung oder als mobile Applikationsvorrichtung, die insbesondere an einem Roboterarm angeordnet ist, ausgebildet sein.

Des Weiteren ist insbesondere vorgesehen, dass die Reinigungsvorrichtung eine Rollenanordnung umfasst, wobei die Andrückrolle wiederum von der Rollenanordnung umfasst ist. Vorteilhafterweise ist die Rollenanordnung antreibbar, um das Reinigungselement in Umlaufbewegung zu versetzen. Eine Rollenanordnung hat den Vorteil, dass hierüber in flexibler Konfiguration ein Reinigungselement geführt werden kann. Außerdem kann über eine Rollenanordnung ein reibungsarmer Antrieb des Reinigungselements erfolgen. Die Andrückrolle beaufschlagt das Reinigungselement gegen die Aufnahmefläche, wobei über die Andrückrolle vorteilhafterweise gezielt das Andrückverhalten des Reinigungselements gegen die Aufnahmefläche beeinflusst werden kann. Dabei kann insbesondere auch vorgesehen sein, dass die Rollenanordnung eine Bewegung, insbesondere rotatorische oder lineare Bewegung, aufweist, über die die Andrückrolle bezogen auf die Aufnahmefläche zustellbar ist. Durch die Zustellbewegung kann die Andrückrolle, insbesondere das Rollenaußenelement der Andrückrolle, vorteilhaferweise auch gezielt verformt werden.

Insbesondere sieht eine Ausgestaltung der Applikationsvorrichtung vor, dass das Rollengrundelement zusammen mit dem Rollenmittenelement einstückig ausgebildet ist. Hierbei entspricht dann selbstverständlich das erste Material dem zweiten Material. Insbesondere bilden das Rollengrundelement und das Rollenmittenelement dabei zusammen ein Rollengrundmittenelement. Das Rollengrundelement wird insbesondere durch den Bereich mit dem geringsten Durchmesser des Rollengrundmittenelements an den Außenseiten der Andrückrolle definiert. Das Rollenmittenelement wird insbesondere durch den Bereich des größten Durchmessers des Rollengrundmittenelements definiert. Vorzugsweise ist das Rollengrundmittenelement dabei aus Metall und das Rollenaußenelement ist vorzugsweise aus Polyurethan.

Eine vorteilhafte Ausgestaltungsvariante, die insbesondere Fertigungsvorteile aufweist, sieht hingegen vor, dass das Rollengrundelement zusammen mit dem Rollenmittenelement nicht einstückig ausgebildet ist. Das Rollengrundelement und das Rollenmittelelement sind hierbei insbesondere verschiedene, separate Elemente, die miteinander verbunden werden. Vorteilhafterweise ermöglicht diese Ausgestaltung die Verwendung eines Rollengrundelements mit einer zylindrischen Form. Das Rollenmittenelement ist dabei vorteilhafterweise mittig an dem Rollengrundelement angeordnet. Das erste Material des Rollengrundelements und das zweite Material des Rollenmittenelements sind dabei insbesondere verschieden, wobei das zweite Material vorteilhafterweise eine geringere Härte aufweist als das erste Material und das dritte Material vorteilhafterweise eine geringere Härte aufweist als das zweite Material. Vorteilhafterweise sind das zweite Material und das dritte Material elastisch verformbar ausgebildet, wobei das dritte Material vorteilhafterweise eine höhere Elastizität aufweist als das zweite Material. Aus der Verwendung verschiedener Materialien für das Rollengrundelement und das Rollenmittenelement ergeben sich dabei vorteilhafterweise auch Fertigungsvorteile. Davon abweichend können bei dieser Ausgestaltung aber auch das erste Material und das zweite Material gleich sein oder zumindest die gleiche Härte oder im Wesentlichen die gleiche Härte aufweisen.

Das Rollengrundelement der Andrückrolle weist gemäß einer vorteilhaften Ausgestaltung über seine Längserstreckungsrichtung einen konstanten Durchmesser auf. Insbesondere kann das Rollengrundelement dabei als Buchse ausgebildet sein, die insbesondere auf eine Achse oder ein Lager aufgebracht sein kann, insbesondere um das Reinigungselement in eine Umlaufbewegung versetzen zu können. Des Weiteren resultieren aus dem konstanten Durchmesser Fertigungsvorteile, insbesondere wenn das Rollengrundelement ein separates Bauteil ist.

Weiter vorteilhaft ist das Rollengrundelement zumindest teilweise aus Metall, insbesondere vollständig aus Metall. Als Metall ist dabei insbesondere Aluminium vorgesehen, weiter insbesondere eine aushärtbare Aluminiumlegierung, die sich als besonders geeignet herausgestellt hat. Auf diese Weise lässt sich die Andrückrolle in eine stabile Bewegung versetzen und es lässt sich eine gute Haltbarkeit erzielen.

Des Weiteren weist das Rollenmittenelement der Andrückrolle vorteilhafterweise über seine Längserstreckungsrichtung einen konstanten Durchmesser auf, insbesondere wenn das Rollenmittenelement nicht einstückig mit dem Rollengrundelement ausgebildet ist. Hieraus resultierenden weitere Fertigungsvorteile. Zudem ist das Rollenmittenelement auf diese Weise besonders geeignet dazu ausgebildet, dass das Reinigungselement mit einer ausreichenden Kraft auf die zu reinigende Aufnahmefläche gedrückt werden kann. Insofern ist auch eine gewisse Stabilität des Rollenmittenelements vorteilhaft. Insbesondere sieht eine Ausgestaltung vor, dass das Rollenmittenelement zumindest teilweise aus Moosgummi ist, insbesondere vollständig aus Moosgummi ist. Eine weitere vorteilhafte Ausgestaltung sieht vor, dass das Rollenmittenelement zumindest teilweise aus Polyurethan ist, insbesondere vollständig aus Polyurethan ist. Vorteilhafterweise weist das Material des Rollenmittenelements folgende oder ähnliche Werkstoffeigenschaften auf, wobei ähnliche Werkstoffeigenschaften insbesondere Werkstoffeigenschaften sind, die um bis zu 15 % abweichende Werte aufweisen: Rückprallelastizität von 60 %; Stauchhärte von 1,05 N/mm² (N: Newton; mm: Millimeter) bei 10 % Stauchung im dritten Belastungszyklus; statischer Elastizitätsmodul von 9,5 N/mm² bei einer Pressung von 1,2 N/mm²; dynamischer Elastizitätsmodul von 16 N/mm² bei einer Pressung von 1,2 N/mm² und 10 Hz (Hz: Hertz).

Auch das Rollenaußenelement kann über seine Längserstreckungsrichtung einen konstanten Durchmesser aufweisen. Vorteilhafterweise hat die Andrückrolle, insbesondere das Rollenaußenelement der Andrückrolle, an den Außenkanten aber "überschüssiges" weiches Material, wodurch vorteilhafterweise ein stärkerer "Nachfeder"-Effekt erzielt werden kann. Gemäß einer weiteren vorteilhaften Ausgestaltung weist das Rollenaußenelement der Andrückrolle daher über seine Längserstreckungsrichtung einen sich von seinen Außenseiten zur Mitte hin verringernden Durchmesser auf. Die Außenfläche des Rollenaußenelements kann insofern insbesondere eine im Wesentlichen konkave Form aufweisen. Für die konkrete Kontur der Außenfläche des Rollenaußenelements können dabei durchaus verschiedene Ausgestaltungen vorgesehen werden. Eine Ausgestaltung, die sich als besonders vorteilhaft erwiesen hat, sieht dabei vor, dass der Durchmesser des Rollenaußenelements sich von den Außenseiten des Rollenaußenelements zur Mitte des Rollenaußenelements hin jeweils linear verlaufend verringert. Die Andrückrolle hat insofern insbesondere die Gestalt von zwei aneinander angeordneten Kegelstümpfen, die mit den Stümpfen miteinander verbunden sind. Besonders gute Reinigungsergebnisse auch an schwierigen Bauteilgeometrien, insbesondere im Bereich von S-Schlägen und im Bereich von Ecken, wurde dabei mit vorteilhaften Ausgestaltungen erzielt, bei denen ein Steigungswinkel des linearen Verlaufs des Durchmessers des Rollenaußenelements von Außen nach Innen, also von einer jeweiligen Außenseite des Rollenaußenelements hin zur Mitte zwischen den beiden Außenseiten des Rollenaußenelements, insbesondere zwischen -10° und -30° beträgt, weiter insbesondere zwischen -15° und -25° beträgt, weiter insbesondere -20° beträgt.

Des Weiteren ist insbesondere vorgesehen, dass das Rollenaußenelement die gleiche Breite aufweist, wie das Rollengrundelement. Insbesondere ist aber auch eine Ausgestaltung vorgesehen, bei dem das Rollenaußenelement zweiteilig ausgebildet ist, und das Rollenaußenelement mit je einem Teil das Rollenmittenelement rechts und links einschließt, wobei das Rollenaußenelement das Rollenmittenelement überragt. Das Rollenaußenelement kann hierbei insbesondere zweistückig ausgebildet sein.

Gemäß einer weiteren vorteilhaften Ausgestaltung beträgt das Verhältnis des äußeren Durchmessers des Rollenaußenelements, also des Durchmessers an den Außenseiten des Rollenaußenelements, insbesondere des maximalen Durchmessers des Rollenaußenelements, zu dem größten Durchmesser, also dem maximalen Durchmesser, des Rollenmittenelements zwischen 1 und 2, weiter insbesondere zwischen 1,3 und 1,7, weiter insbesondere 1,5. Das Verhältnis des inneren Durchmessers des Rollenaußenelements, also des Durchmessers im mittleren Bereich des Rollenaußenelements, insbesondere des minimalen Durchmessers des Rollenaußenelements, ist vorteilhafterweise größer als 1 und beträgt insbesondere zwischen 1 und 1,3, weiter insbesondere 1,1. Vorteilhafterweise weist die Andrückrolle auf diese Weise eine besonders geeignete Menge an "überschüssigem" weichen Material auf, wodurch ein besondere guter "Nachfeder"-Effekt erzielt wird.

Insbesondere ist vorgesehen, dass das Rollenaußenelement zumindest teilweise aus Moosgummi ist, insbesondere vollständig aus Moosgummi ist. Sind sowohl das Rollenmittenelement als auch das Rollenaußenelement aus Moosgummi, so ist das Moosgummi des Rollenaußenelements vorzugsweise elastisch nachgiebiger ausgebildet als das Moosgummi des Rollenmittenelements.

Eine weitere vorteilhafte Ausgestaltung sieht vor, dass das Rollenaußenelement zumindest teilweise aus Polyurethan ist, insbesondere vollständig aus Polyurethan ist. Vorteilhafterweise weist das Material des Rollenaußenelements folgende oder ähnliche Werkstoffeigenschaften auf, wobei ähnliche Werkstoffeigenschaften insbesondere Werkstoffeigenschaften sind, die um bis zu 15 % abweichende Werte aufweisen: Rückprallelastizität von 55 %; Stauchhärte von 0,05 N/mm² bei 10 % Stauchung im dritten Belastungszyklus; statischer Elastizitätsmodul von 0,2 N/mm² bei einer Pressung von 0,042 N/mm²; dynamischer Elastizitätsmodul von 0,65 N/mm² bei einer Pressung von 0,042 N/mm² und 10 Hz. Mit einem solchen Material lassen sich vorteilhafterweise Winkelabweichungen eines zu reinigenden Bauteilflansches durch ein "Nachfedern" der Andrückrolle besonders gut ausgleichen.

Gemäß einer weiteren vorteilhaften Ausgestaltung beträgt das Verhältnis der Breite des Rollenmittenelements in dem Bereich des größten Durchmessers des Rollenmittenelements zu der Breite des Rollengrundelements zwischen 0,18 und 0,35, insbesondere zwischen 0,2 und 0,25. Ist der Durchmesser des Rollenmittenelements konstant, so beträgt das Verhältnis der Breite des Rollenmittenelements zu der Breite des Rollengrundelements vorteilhafterweise zwischen 0,18 und 0,35, insbesondere zwischen 0,2 und 0,25. Durch dieses Verhältnis wird vorteilhafterweise einerseits sichergestellt, dass eine ausreichende Kraft mittels der Andrückrolle beim Reinigen ausgeübt werden kann und andererseits der gewünschte "Nachfeder"-Effekt erzielt wird.

Das Verhältnis des maximalen Durchmessers des Rollenmittenelements zu dem Durchmesser des Rollengrundelements, insbesondere zu dem Durchmesser des Rollengrundelements an den Außenseiten der Andrückrolle, beträgt vorteilhafterweise zwischen 1,5 und 2,5, insbesondere zwischen 1,8 und 2,2, weiter insbesondere 2. Ein solches Verhältnis hat sich in Versuchen als vorteilhaft in Bezug auf das zu erzielende Reinigungsergebnis bei komplizierteren Bauteilgeometrien herausgestellt.

Eine weitere vorteilhafte Ausgestaltung sieht vor, dass das Rollenmittenelement und das Rollenaußenelement als Beschichtungen auf das Rollengrundelement aufgebracht sind.

Vorteilhafterweise lässt sich eine Andrückrolle auf diese Weise kostengünstig herstellen. Des Weiteren wird durch eine solche Ausgestaltung eine gute Haltbarkeit erzielt.

Weitere vorteilhafte Einzelheiten, Merkmale und Ausgestaltungsdetails der Erfindung werden im Zusammenhang mit den in den Figuren (nachfolgend Fig.: Figur) dargestellten Ausführungsbeispielen näher erläutert. Dabei zeigt:
- Fig. 1: in einer perspektivischen Darstellung ein Ausführungsbeispiel für eine erfindungsgemäß ausgebildete Applikationsvorrichtung;
- Fig. 2: in einer perspektivischen Darstellung einen Ausschnitt eines weiteren Ausführungsbeispiel für eine erfindungsgemäß ausgebildete Applikationsvorrichtung;
- Fig. 3: ein Ausführungsbeispiel für eine erfindungsgemäß ausgebildete Andrückrolle für die Reinigungseinheit einer Applikationsvorrichtung in einer Schnittdarstellung entlang einer Längserstreckungsrichtung der Andrückrolle;
- Fig. 4a: jeweils in einer Schnittdarstellung die Andrückrolle gemäß Fig. 3 beim Anliegen an einer bis Aufnahmefläche, die in den verschiedenen Darstellungen unterschiedlich in Bezug auf
- Fig. 4c: die Andrückrolle ausgerichtet ist; und
- Fig. 5: ein weiteres Ausführungsbeispiel für eine erfindungsgemäß ausgebildete Andrückrolle für die Reinigungseinheit einer Applikationsvorrichtung in einer Schnittdarstellung entlang einer Längserstreckungsrichtung der Andrückrolle.

In den verschiedenen Figuren sind gleiche Teile in der Regel mit den gleichen Bezugszeichen versehen und werden daher mitunter auch jeweils nur im Zusammenhang mit einer der Figuren erläutert.

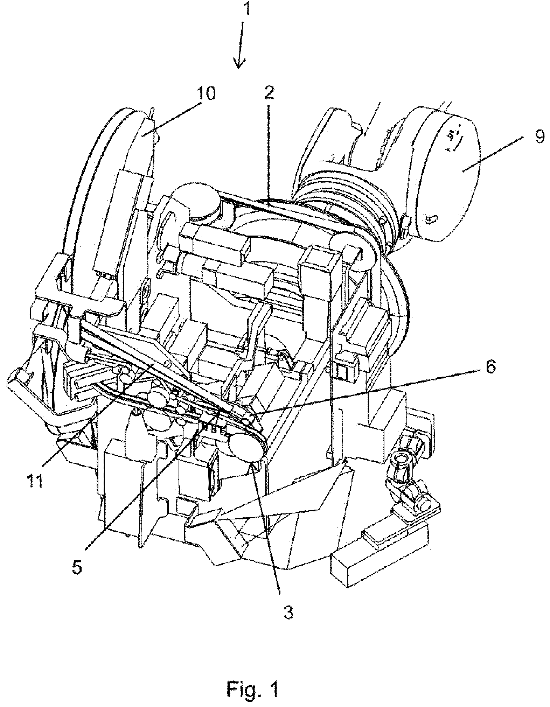

In Fig. 1 ist ein Ausführungsbeispiel für eine an einem Roboterarm 9 angeordnete mobile Applikationsvorrichtung 1 zum Applizieren eines Dichtungsprofils 2 auf einem dem Verschließen einer Karosserieöffnung dienenden Karosseriebauteil darrgestellt. Die Applikationsvorrichtung 1 weist einen Anrollkopf 3 zum Aufbringen des Dichtungsprofils 2 auf eine Aufnahmefläche des Karosseriebauteils und eine dem Anrollkopf 3 bezüglich der Aufnahmefläche des Karosseriebauteils vorauspositionierte Reinigungseinheit 5 zur mechanischen Reinigung der Aufnahmefläche auf. Die Reinigungseinheit 5 umfasst dabei eine Andrückrolle 6 und ein mechanisches Reinigungselement 11, das in diesem Ausführungsbeispiel als bandartiges Reinigungsvlies ausgebildet ist. Die Reinigungseinheit 5 umfasst dabei in diesem Ausführungsbeispiel eine antreibbare Rollenanordnung 51, wobei die Reinigungseinheit 5 mit der Rollenanordnung 51 dazu ausgebildet, das Reinigungselement 11 mit einer Umlaufbewegung unabhängig von der der Applikationsbewegung des Anrollkopfes 3 entlang der Aufnahmefläche zu führen, wobei die Andrückrolle 6 das Reinigungselement 11 gegen die zur reinigende Aufnahmefläche drückt.

Die Andrückrolle 6 umfasst ein rotationssymmetrisch bezüglich einer Rotationsachse der Andrückrolle 6 ausgebildetes Rollengrundelement aus einem ersten Material mit einem ersten Härtewert, wobei sich das Rollengrundelement über die Breite der Andrückrolle 6 erstreckt. Des Weiteren umfasst die Andrückrolle 6 in diesem Ausführungsbeispiel ein rotationssymmetrisch bezüglich der Rotationsachse der Andrückrolle 6 ausgebildetes Rollenmittenelement aus einem zweiten Material mit einem zweiten Härtewert. Das Rollenmittenelement ist dabei mittig an dem Rollengrundelement angeordnet und hat im Bereich des maximalen Durchmessers des Rollenmittenelements eine geringere Breite als das Rollengrundelement. Ferner umfasst die Andrückrolle 6 ein rotationssymmetrisch bezüglich der Rotationsachse der Andrückrolle 6 ausgebildetes Rollenaußenelement aus einem dritten Material mit einem dritten Härtewert, wobei das Rollenaußenelement an dem Rollengrundelement und an dem Rollenmittenelement angeordnet ist und das Rollenmittenelement dabei vollständig umgibt. In diesem Ausführungsbeispiel ist der erste Härtewert größer als der zweite Härtewert, und der zweite Härtewert ist größer als der dritte Härtewert. Damit ist das Rollenaußenelement weicher ausgebildet als das Rollenmittenelement, und das Rollenmittenelement weicher ausgebildet als das Rollengrundelement.

In dem in Fig. 1 gezeigten Ausführungsbeispiel umfasst die Applikationsvorrichtung 1 darüber hinaus weitere unterschiedliche Funktionsmodule, wie zum Beispiel eine Bohreinheit 10, auf die aber hier nicht weiter eingegangen wird.

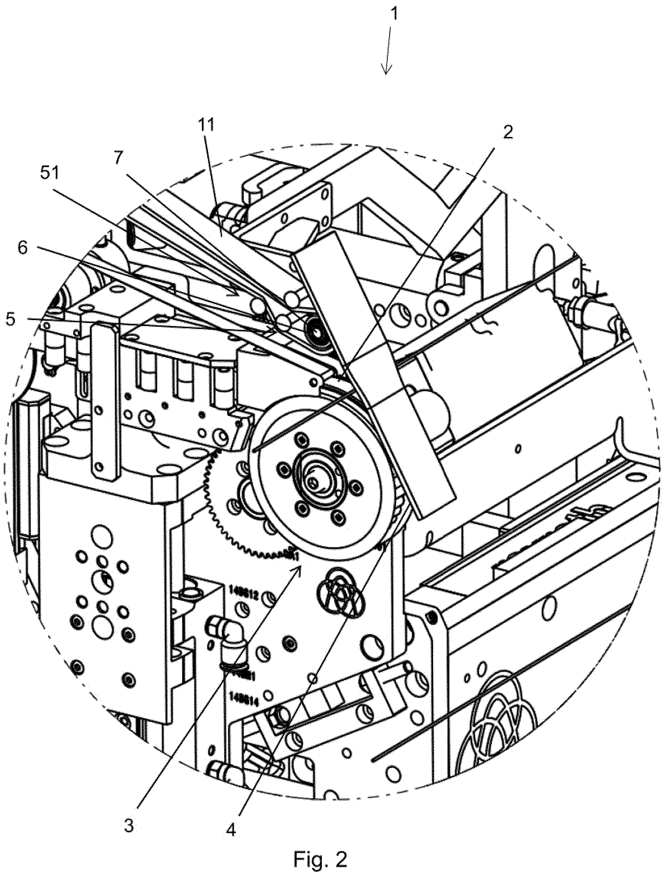

Ein Ausschnitt eines weiteren Ausführungsbeispiels für eine erfindungsgemäß ausgebildete Applikationsvorrichtung 1 ist in Fig. 2 gezeigt. Die Applikationsvorrichtung 1 gemäß Fig. 2 umfasst im Wesentlichen die gleichen Merkmale, wie die unter Bezugnahme auf Fig. 1 erläuterte Applikationsvorrichtung 1, wobei in Fig. 2 die Reinigungseinheit 5 mit der Rollenanordnung 51, dem mechanischen Reinigungselement 11 und der Andrückrolle 6 detaillierter dargestellt ist. Darüber hinaus ist in Fig. 2 beispielhaft ein Ausschnitt für eine Aufnahmefläche 4 eines Karosseriebauteils dargestellt, auf die nach einer Reinigung der Aufnahmefläche 4 mittels der Reinigungseinheit 5 ein Dichtungsprofil 2 unter Nutzung des Anrollkopfes 3 appliziert wird.

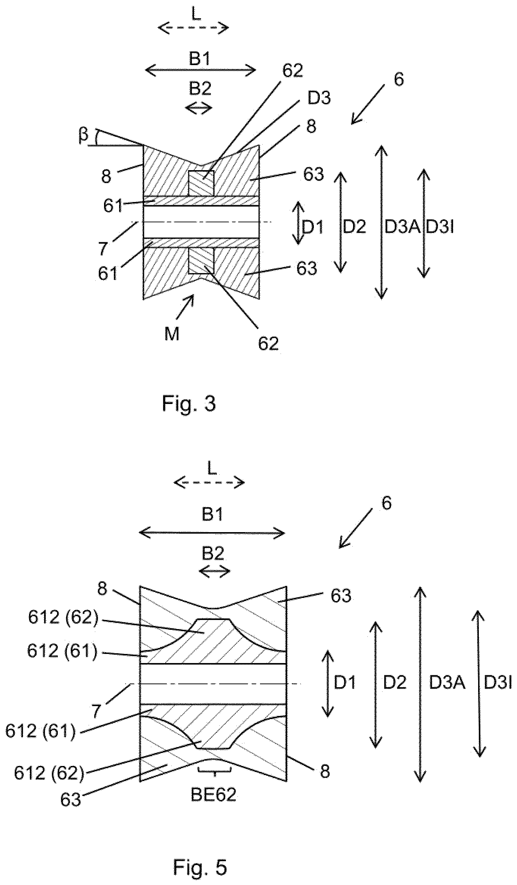

Eine vorteilhafte Ausgestaltung für eine Andrückrolle 6, insbesondere für die Andrückrolle 6 der Applikationsvorrichtung 1 gemäß Fig. 1 oder gemäß Fig. 2, ist in einer Schnittdarstellung in Längsrichtung L der Andrückrolle 6 in Fig 3 dargestellt. Die Andrückrolle 6 umfasst in diesem Ausführungsbeispiel ein rotationssymmetrisch bezüglich einer Rotationsachse 7 der Andrückrolle 6 ausgebildetes Rollengrundelement 61 aus einem ersten Material, wobei sich das Rollengrundelement 61 über die gesamte Breite B1 der Andrückrolle 6 erstreckt. Die Breite B1 der Andrückrolle beträgt in diesem Ausführungsbeispiel 18 mm. Das Rollengrundelement 61 der Andrückrolle 6 weist über seine Längserstreckungsrichtung L einen konstanten Durchmesser D1 auf, der in diesem Ausführungsbeispiel 8 mm beträgt. Die Wandstärke des Rollengrundelements 61 beträgt in diesem Ausführungsbeispiel 1,2 mm. Das Material, aus dem das Rollengrundelement 61 ist, ist in diesem Ausführungsbeispiel eine Aluminium-Zink-Legierung.

Die Andrückrolle 6 umfasst darüber hinaus ein rotationssymmetrisch bezüglich der Rotationsachse 7 der Andrückrolle 6 ausgebildetes Rollenmittenelement 62 aus einem zweiten Material, bei dem es sich in diesem Ausführungsbeispiel um einen Polyurethan-Werkstoff handelt. Das zweite Material weist damit eine höhere Elastizität auf als das erste Material. Das Rollenmittenelement 62 ist mittig an dem Rollengrundelement 61 angeordnet und weist eine Breite B2 auf, die geringer ausfällt als die Breite B1 des Rollengrundelements 61. In diesem Ausführungsbeispiel beträgt die Breite B2 des Rollenmittenelements 62 4 mm. Das Verhältnis der Breite B2 des Rollenmittenelements 62 zu der Breite B1 des Rollengrundelements 61 beträgt in diesem Ausführungsbeispiel somit ungefähr 0,22. Über seine Längserstreckungsrichtung L hat das Rollenmittenelement 62 der Andrückrolle 6 einen konstanten Durchmesser D2. Dieser Durchmesser D2 beträgt in diesem Ausführungsbeispiel 16 mm. Das Verhältnis des Durchmessers D2 des Rollenmittenelements 62 zu dem Durchmesser D1 des Rollengrundelements 61 beträgt daher in diesem Ausführungsbeispiel 2.

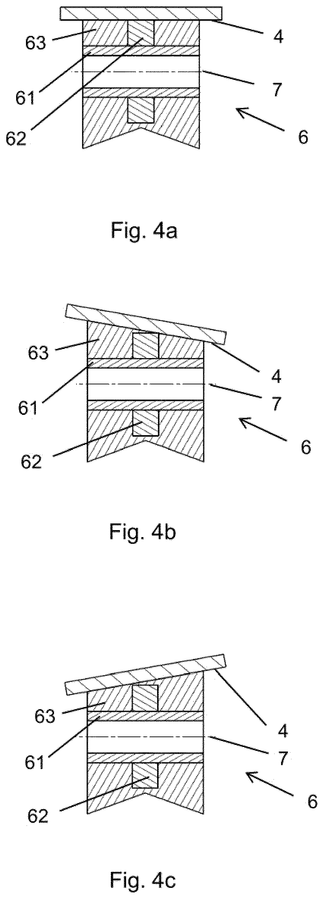

Des Weiteren umfasst die Andrückrolle 6 ein rotationssymmetrisch bezüglich der Rotationsachse 7 der Andrückrolle 6 ausgebildetes Rollenaußenelement 63 aus einem dritten Material. In diesem Ausführungsbeispiel ist als drittes Material ein weiterer Polyurethan-Werkstoff vorgesehen, der eine höhere elastische Nachgiebigkeit aufweist, als der Polyurethan-Werkstoff, aus dem das Rollenmittenelement 62 ist. Insbesondere ist der Polyurethan-Werkstoff des Rollenmittenelements 62 so ausgebildet, dass sich dieser beim Gebrauch der Andrückrolle 6 im Wesentlichen nicht verformt, wohingegen der Polyurethan-Werkstoff des Rollenaußenelements 63 so ausgebildet ist, dass sich dieser beim Gebrauch der Andrückrolle 6 elastisch verformen kann, wie insbesondere in Fig. 4a bis Fig. 4c dargestellt. Das Rollenaußenelement 63 ist, wie in Fig. 3 ersichtlich, das Rollenmittenelement 62 umgebend an dem Rollengrundelement 61 und an dem Rollenmittenelement 62 angeordnet. Das Rollenaußenelement 63 weist dabei die gleiche Breite B1 auf, wie das Rollengrundelement 61, in diesem Ausführungsbeispiel also auch eine Breite B1 von 18 mm.

Das Rollenaußenelement 63 der Andrückrolle 6 weist in diesem Ausführungsbeispiel über seine Längserstreckungsrichtung L zudem einen sich von seinen Außenseiten 8 zur Mitte M hin verringernden Durchmesser D3 auf. Der Durchmesser D3 des Rollenaußenelements 63 verringert sich dabei jeweils linear verlaufend von den Außenseiten 8 des Rollenaußenelements 63 zur Mitte M des Rollenaußenelements 63 hin. An den Außenseiten 8 beträgt der Durchmesser D3A des Rollenaußenelements 63 in diesem Ausführungsbeispiel dabei 24 mm und verringert sich zur Mitte M hin auf den Durchmesser D3I. Der Steigungswinkel β des linearen Verlaufs des Durchmessers D3 des Rollenaußenelements 63 beträgt dabei in diesem Ausführungsbeispiel von der jeweiligen Außenseite 8 zur Mitte M hin -20°, wobei das Verhältnis des Durchmessers D3A des Rollenaußenelements 63 an den Außenseiten 8 zu dem Durchmesser D2 des Rollenmittenelements 62 1,5 beträgt.

Das Rollenmittenelement 62 und das Rollenaußenelement 63 sind dabei in diesem Ausführungsbeispiel als Beschichtungen auf das Rollengrundelement 61 aufgebracht und bilden so als nicht zerstörungsfrei lösbare Einheit die Andrückrolle 6, die mit dem Rollengrundelement 61 auf eine Achse oder auf ein Lager, insbesondere auf ein Wälzlager, aufgebracht werden kann.

In Fig. 4a bis Fig. 4c ist beispielhaft in einer schematisierten Darstellung gezeigt, wie sich die Andrückrolle 6 gemäß Fig. 3 bei gleicher Ausrichtung an Winkelabweichungen in Bezug auf die zu reinigende Aufnahmefläche 4 durch das "Nachfedern" des elastischen Materials des Rollenaußenelements 63 anpasst. Durch den sich von den Außenseiten 8 zur Mitte M hin reduzierenden Durchmesser D3 des Rollenaußenelements 63 kann durch das "überschüssige" weiche Material in den Außenbereichen vorteilhafterweise zudem ein stärkerer "Nachfeder"-Effekt erzielt werden.

Eine weitere Ausgestaltung für eine Andrückrolle 6, die ebenfalls insbesondere mit einer in Fig. 1 oder Fig. 2 dargestellten Applikationsvorrichtung 1 verwendet werden kann, ist in einer Schnittdarstellung in Längsrichtung L der Andrückrolle 6 in Fig 5 dargestellt. Die Andrückrolle 6 umfasst in diesem Ausführungsbeispiel ein rotationssymmetrisch bezüglich einer Rotationsachse 7 der Andrückrolle 6 ausgebildetes Rollengrundelement 61 und ein rotationssymmetrisch bezüglich der Rotationsachse 7 der Andrückrolle 6 ausgebildetes Rollenmittenelement 62, wobei das Rollengrundelement 61 und das Rollenmittelement 62 zusammen einstückig ausgebildet sind und so zusammen ein Rollengrundmittenelement 612 bilden. Dieses Rollengrundmittenelement 612 ist in diesem Ausführungsbeispiel aus Metall, insbesondere aus einer Aluminiumlegierung.

Des Weiteren umfasst die Andrückrolle 6 ein rotationssymmetrisch bezüglich der Rotationsachse 7 der Andrückrolle 6 ausgebildetes Rollenaußenelement 63 aus Polyurethan, das elastisch nachgiebig ausgebildet ist und insbesondere elastisch stauchbar ist, insbesondere wie das in Fig. 4a bis Fig. 4c gezeigte Rollenaußenelement 63. Das Rollenaußenelement 63 weist insofern eine signifikant geringere Härte auf als das Rollengrundmittenelement 612.

Das Rollengrundelement 61, das in diesem Ausführungsbeispiel nahtlos in das Rollenmittenelement 62 übergeht, erstreckt sich über die gesamte Breite B1 der Andrückrolle 6. Das Rollenmittenelement 62, insbesondere der Bereich BE62 des Rollenmittenelements 62 mit dem maximale Durchmesser D2 ist mittig bezüglich des Rollengrundelements 61 angeordnet und weist in dem Bereich BE62 des größten Durchmessers D2 des Rollenmittenelements 62 eine geringere Breite B2 auf als das Rollengrundelement 61.

Das Rollenaußenelement 63 ist das Rollengrundmittenelement 612 umgebend an dem Rollengrundmittenelement 612 angeordnet, insbesondere als Beschichtung auf das Rollengrundmittenelement 612 aufgebracht. Das Verhältnis des maximalen Durchmessers D3A des Rollenaußenelements 63 an den Außenseiten 8 der Andrückrolle 6 zu dem größten Durchmesser D2 des Rollenmittenelements 62 beträgt zwischen 1 und 2; in Fig. 5 ungefähr 1,5.

Wie in Fig. 5 dargestellt, weist in diesem Ausführungsbeispiel das Rollenmittenelement 62 der Andrückrolle 6 über seine Längserstreckungsrichtung L nur in dem Bereich BE62 einen konstanten Durchmesser D2 auf. Der Durchmesser des Rollengrundmittenelements 612 nimmt dabei von den Außenseiten 8 ausgehend von dem minimalen Durchmesser D1 hin zu dem maximalen Durchmesser D2 zu, wie in Fig. 5 dargestellt, insbesondere gemäß einer quadratischen Funktion.

Wie auch beim dem Ausführungsbeispiel gemäß Fig. 3, weist das Rollenaußenelement 63 der Andrückrolle 6 über seine Längserstreckungsrichtung L einen maximalen Durchmesser D3A an seinen Außenseiten 8 auf, der sich zur Mitte M hin auf den minimalen Durchmesser D3I reduziert. Das Rollenaußenelement 63 weist dabei die gleiche Breite B1 auf, wie das Rollengrundelement 61.

Das Verhältnis der Breite B2 des Rollenmittenelements 62 in dem Bereich BE62 des größten Durchmessers D2 zu der Breite B1 des Rollengrundelements 61 beträgt zwischen 0,18 und 0,35. Das Verhältnis des Durchmessers maximalen Durchmessers D2 des Rollenmittenelements 62 zu dem minimalen Durchmesser D1 des Rollengrundelements 61 beträgt zwischen 1,5 und 2,5; in Fig. 5 ungefähr 2.

Die in den Figuren dargestellten und im Zusammenhang mit diesen erläuterten Ausführungsbeispiele dienen der Erläuterung der Erfindung und sind für diese nicht beschränkend.

### Bezugszeichenliste

- 1: Applikationsvorrichtung
- 2: Dichtungsprofil
- 3: Anrollkopf
- 4: Aufnahmefläche des Karosseriebauteils
- 5: Reinigungseinheit
- 51: Rollenanordnung
- 6: Andrückrolle
- 61: Rollengrundelement
- 62: Rollenmittenelement
- 612: Rollengrundmittenelement
- 63: Rollenaußenelement
- 7: Rotationsachse
- 8: Außenseite des Rollenaußenelements (63)
- 9: Roboterarm
- 10: Bohreinheit
- 11: mechanisches Reinigungselement
- B1: Breite der Andrückrolle (6)
- B2: Breite des Rollenmittenelements (62)
- D1: Durchmesser des Rollengrundelements (61)
- D2: Durchmesser des Rollenmittelelements (62)
- D3: Durchmesser des Rollenaußenelements (63)
- D3A: Durchmesser des Rollenaußenelements (63) an den Außenseiten (8)
- D3I: Durchmesser des Rollenaußenelements (63) in der Mitte (M)
- M: Mitte des Rollenaußenelements (63)
- BE62: Bereich des Rollenmittenelements (62) mit maximalem Durchmesser (D2)
- L: Längserstreckungsrichtung
- β: Steigungswinkel

## Patentansprüche

1. Applikationsvorrichtung (1) zum Applizieren eines Dichtungsprofils (2) auf einem dem Verschließen einer Karosserieöffnung dienenden Karosseriebauteil, umfassend einen Anrollkopf (3) zum Aufbringen des Dichtungsprofils (2) auf eine Aufnahmefläche (4) des Karosseriebauteils und
eine dem Anrollkopf (3) bezüglich der Aufnahmefläche (4) des Karosseriebauteils vorauspositionierte Reinigungseinheit (5) zur mechanischen Reinigung der Aufnahmefläche (4),
wobei die Reinigungseinheit (5) eine Andrückrolle (6) umfasst,
**dadurch gekennzeichnet,**
**dass** die Andrückrolle (6) ein rotationssymmetrisch bezüglich einer Rotationsachse (7) der Andrückrolle (6) ausgebildetes Rollengrundelement (61) aus einem ersten Material umfasst,
wobei sich das Rollengrundelement (61) über die Breite (B1) der Andrückrolle (6) erstreckt, **dass** die Andrückrolle (6) ein rotationssymmetrisch bezüglich der Rotationsachse (7) der Andrückrolle (6) ausgebildetes Rollenmittenelement (62) aus einem zweiten Material umfasst,
wobei das Rollenmittenelement (62) mittig bezüglich des Rollengrundelements (61) angeordnet ist und zumindest in einem Bereich eines größten Durchmessers (D2) des Rollenmittenelements (62) eine geringere Breite (B2) als das Rollengrundelement (61) aufweist, und
**dass** die Andrückrolle (6) ein rotationssymmetrisch bezüglich der Rotationsachse (7) der Andrückrolle (6) ausgebildetes Rollenaußenelement (63) aus einem dritten Material umfasst,
wobei das Rollenaußenelement (63) das Rollenmittenelement (62) umgebend an dem Rollengrundelement (61) und an dem Rollenmittenelement (62) angeordnet ist,
wobei das dritte Material eine geringere Härte aufweist als das zweite Material und als das erste Material.

2. Applikationsvorrichtung (1) nach Anspruch 1, **dadurch gekennzeichnet, dass** das Rollengrundelement (61) zusammen mit dem Rollenmittenelement (62) einstückig ausgebildet ist, wobei das erste Material dem zweiten Material entspricht.

3. Applikationsvorrichtung (1) nach Anspruch 1, **dadurch gekennzeichnet, dass** das Rollenmittenelement (62) an dem Rollengrundelement (61) angeordnet ist.

4. Applikationsvorrichtung (1) nach Anspruch 3, **dadurch gekennzeichnet, dass** das zweite Material ein von dem ersten Material verschiedenes Material ist, und das zweite Material eine geringere Härte aufweist als das erste Material.

5. Applikationsvorrichtung (1) nach einem der vorstehenden Ansprüche, **dadurch gekennzeichnet, dass** das Rollengrundelement (61) der Andrückrolle (6) über seine Längserstreckungsrichtung (L) einen konstanten Durchmesser (D1) aufweist; und/oder **dass** das Rollenmittenelement (62) der Andrückrolle (6) über seine Längserstreckungsrichtung (L) einen konstanten Durchmesser (D2) aufweist.

6. Applikationsvorrichtung (1) nach einem der vorstehenden Ansprüche, **dadurch gekennzeichnet, dass** das Rollenaußenelement (63) der Andrückrolle (6) über seine Längserstreckungsrichtung (L) einen sich von seinen Außenseiten (8) zur Mitte (M) hin verringernden Durchmesser (D3A, D3I) aufweist.

7. Applikationsvorrichtung (1) nach Anspruch 6, **dadurch gekennzeichnet, dass** der Durchmesser (D3A, D3I) des Rollenaußenelements (63) sich von den Außenseiten (8) des Rollenaußenelements (63) zur Mitte (M) des Rollenaußenelements (63) hin jeweils linear verlaufend verringert.

8. Applikationsvorrichtung (1) nach Anspruch 7, **dadurch gekennzeichnet, dass** der Steigungswinkel (β) des linearen Verlaufs des Durchmessers (D3) des Rollenaußenelements (63) von einer jeweiligen Außenseite (8) zur Mitte (M) zwischen -10° und -30° beträgt.

9. Applikationsvorrichtung (1) nach einem der vorstehenden Ansprüche, **dadurch gekennzeichnet, dass** das Rollenaußenelement (63) die gleiche Breite (B1) aufweist, wie das Rollengrundelement (61).

10. Applikationsvorrichtung (1) nach einem der vorstehenden Ansprüche, **dadurch gekennzeichnet, dass** das Verhältnis der Breite (B2) des Rollenmittenelements (62) in dem Bereich des größten Durchmessers (D2) zu der Breite (B1) des Rollengrundelements (61) zwischen 0,18 und 0,35 beträgt.

11. Applikationsvorrichtung (1) nach einem der vorstehenden Ansprüche, **dadurch gekennzeichnet, dass** das Verhältnis des maximalen Durchmessers (D2) des Rollenmittenelements (62) zu dem Durchmesser (D1) des Rollengrundelements (61) zwischen 1,5 und 2,5 beträgt.

12. Applikationsvorrichtung (1) nach einem der vorstehenden Ansprüche, **dadurch gekennzeichnet, dass** das Verhältnis des Durchmessers (D3A) des Rollenaußenelements (63) an den Außenseiten (8) zu dem größten Durchmesser (D2) des Rollenmittenelements (62) zwischen 1 und 2 beträgt.

13. Applikationsvorrichtung (1) nach einem der vorstehenden Ansprüche, **dadurch gekennzeichnet, dass** das Rollengrundelement (61) zumindest teilweise aus Metall ist.

14. Applikationsvorrichtung (1) nach einem der vorstehenden Ansprüche, **dadurch gekennzeichnet, dass** das Rollenmittenelement (62) zumindest teilweise aus Moosgummi ist; und/oder **dass** das Rollenmittenelement (62) zumindest teilweise aus Polyurethan ist; und/oder **dass** das Rollenaußenelement (63) zumindest teilweise aus Moosgummi ist und/oder **dass** das Rollenaußenelement (63) zumindest teilweise aus Polyurethan ist.

15. Applikationsvorrichtung (1) nach einem der vorstehenden Ansprüche, **dadurch gekennzeichnet, dass** das Rollenmittenelement (62) und das Rollenaußenelement (63) als Beschichtungen auf das Rollengrundelement (61) aufgebracht sind; oder **dass** das Rollenaußenelement (63) als Beschichtung auf das Rollengrundelement (61) und das Rollenmittenelement (62) aufgebracht ist.
